# EUROPÄISCHE PATENTANMELDUNG

(11) **EP 0 985 913 A1**
(43) Veröffentlichungstag der Anmeldung: **15.03.2000**
(21) Anmeldenummer: 99117609.0
(22) Anmeldetag: 07.09.1999
(51) Int. Cl.: G01F 1/84

(54) **Gerades Coriolisdurchflussmessgerät mit Kompensationszylinder**

(30) Priorität: 08.09.1998 DE 19840782
(71) Anmelder: KROHNE MESSTECHNIK GMBH & CO. KG, D-47058 Duisburg (DE)
(72) Erfinder: Poremba, Andreas, 42107 Wuppertal (DE)
(74) Vertreter: Patentanwälte Gesthuysen, von Rohr, Weidener, Häckel

(57) **Zusammenfassung**

Dargestellt und beschrieben ist ein Massendurchflußmeßgerät, das nach dem Coriolis-Prinzip arbeitet, mit einem ein strömendes Medium führenden, im wesentlichen geraden Coriolis-Meßrohr (1), mit mindestens einem dem Coriolis-Meßrohr (1) zugeordneten, das Coriolis-Meßrohr (1) anregenden Schwingungserzeuger (2, 3), mit mindestens einem dem Coriolis-Meßrohr (1) zugeordneten, Coriolis-Kräfte und/oder auf Coriolis-Kräften beruhende Coriolis-Schwingungen erfassenden Meßwertaufnehmer (4, 5) und mit einem Kompensationszylinder (6), wobei das Coriolis-Meßrohr (1) innerhalb des Kompensationszylinders (6) angeordnet und mit dem Kompensationszylinder (6) mechanisch verbunden ist.

Erfindungsgemäß ist die Meßgenauigkeit des Massendurchflußmeßgeräts dadurch nochmals wesentlich verbessert, daß sowohl die Anregungs-Schwingung als auch die Coriolis-Schwingung des Coriolis-Meßrohres (1) im Kompensationszylinder (6) ausgeglichen sind.

## Beschreibung

Die Erfindung betrifft ein Massendurchflußmeßgerät, das nach dem Coriolis-Prinzip arbeitet, mit einem ein strömendes Medium führenden, im wesentlichen geraden Coriolis-Meßrohr, mit mindestens einem dem Coriolis-Meßrohr zugeordneten, das Coriolis-Meßrohr anregenden Schwingungserzeuger, mit mindestens einem dem Coriolis-Meßrohr zugeordneten, Coriolis-Kräfte und/oder auf Coriolis-Kräften beruhende Coriolis-Schwingungen erfassenden Meßwertaufnehmer und mit einem Kompensationszylinder, wobei das Coriolis-Meßrohr innerhalb des Kompensationszylinders angeordnet und mit dem Kompensationszylinder mechanisch verbunden ist.

Zuvor ist gesagt worden, daß zu dem in Rede stehenden Massendurchflußmeßgerät u. a. gehören mindestens ein dem Coriolis-Meßrohr "zugeordneter" Schwingungserzeuger und mindestens ein dem Coriolis-Meßrohr "zugeordneter" Meßwertaufnehmer. In der Regel sind der Schwingungserzeuger oder die Schwingungserzeuger, jedenfalls ein Teil des Schwingungserzeugers bzw. ein Teil der Schwingungserzeuger und der Meßwertaufnehmer bzw. die Meßwertaufnehmer, jedenfalls ein Teil des Meßwertaufnehmers bzw. ein Teil der Meßwertaufnehmer mit dem Coriolis-Meßrohr verbunden. Da das jedoch nicht zwingend ist, ist der Ausdruck "zugeordnet" - statt des Ausdruckes "verbunden" - verwendet worden.

Bei Massendurchflußmeßgeräten, die nach dem Coriolis-Prinzip arbeiten, unterscheidet man grundsätzlich zwischen einerseits solchen, deren Coriolis-Meßrohr zumindest im wesentlichen gerade ausgeführt ist, und andererseits solchen, deren Coriolis-Meßrohr schleifenförmig ausgeführt ist. Außerdem unterscheidet man bei den in Rede stehenden Massendurchflußmeßgeräten zwischen einerseits solchen, die nur ein Coriolis-Meßrohr aufweisen, und andererseits solchen, die zwei Coriolis-Meßrohre aufweisen; bei den Ausführungsformen mit zwei Coriolis-Meßrohren können diese strömungstechnisch in Reihe oder parallel zueinander liegen.

In jüngerer Zeit setzen sich zunehmend die Massendurchflußmeßgeräte mit nur einem im wesentlichen geraden Coriolis-Meßrohr durch. Nach dem Coriolis-Prinzip arbeitende Massendurchflußmeßgeräte, die nur ein gerades Coriolis-Meßrohr aufweisen, haben gegenüber solchen Massendurchflußmeßgeräten, die entweder zwei gerade Coriolis-Meßrohre oder ein schleifenförmiges Coriolis-Meßrohr aufweisen, erhebliche Vorteile. Gegenüber Massendurchflußmeßgeräten mit zwei geraden Coriolis-Meßrohren ist der Vorteil vor allem darin zu sehen, daß Strömungsteiler bzw. Strömungszusammenführer, die bei Massendurchflußmeßgeräten mit zwei Coriolis-Meßrohren erforderlich sind, nicht benötigt werden. Gegenüber Massendurchflußmeßgeräten mit einem schleifenförmigen Coriolis-Meßrohr bzw. mit zwei schleifenförmigen Coriolis-Meßrohren ist der Vorteil vor allem darin zu sehen, daß ein gerades Coriolis-Meßrohr einfacher als ein schleifenförmiges Coriolis-Meßrohr hergestellt werden kann, daß der Druckabfall bei einem geraden Coriolis-Meßrohr geringer ist als bei einem schleifenförmigen Coriolis-Meßrohr und daß ein gerades Coriolis-Meßrohr besser gereinigt werden kann als ein schleifenförmiges Coriolis-Meßrohr.

Massendurchflußmeßgeräte mit nur einem geraden Coriolis-Meßrohr sind trotz aller Vorteile unter einer Mehrzahl von Gesichtspunkten problematisch.

Zunächst treten aufgrund des gerade ausgeführten Coriolis-Meßrohres, durch thermisch verursachte Ausdehnungen bzw. Spannungen bedingt, Abhängigkeiten der Meßgenauigkeit von der Temperatur des strömenden Mediums auf. Im Extremfall können die thermisch bedingten Spannungen sogar zu mechanischen Schäden, nämlich zu Spannungsrissen, an dem Coriolis-Meßrohr führen.

Mit den zuvor aufgezeigten Problemen bei Massendurchflußmeßgeräten mit geraden Coriolis-Meßrohren hat sich die Fachwelt bereits befaßt (vgl. insbesondere die deutsche Patentschrift 41 24 295, die deutsche Offenlegungsschrift 41 43 361 und die deutsche Patentschrift 42 24 379). Diese Probleme sind dabei dadurch weitgehend gelöst worden, daß einerseits das Coriolis-Meßrohr und der Kompensationszylinder in einer axiale Relativbewegungen ausschließenden Weise miteinander verbunden sind, so daß der axiale Abstand der Verbindungsstellen Coriolis-Meßrohr / Kompensationszylinder die Schwingungslänge des Coriolis-Meßrohres darstellt, daß andererseits das Coriolis-Meßrohr mit Zug-Vorspannung innerhalb des Kompensationszylinder angeordnet ist (deutsche Patentschrift 41 24 295) und/oder daß das Coriolis-Meßrohr und der Kompensationszylinder aus Werkstoffen mit gleichen oder nahezu gleichen Wärmeausdehnungskoeffizienten bestehen (deutsche Offenlegungsschrift 41 43 361) und/oder daß ein Änderungen der Schwingungslänge des Coriolis-Meßrohres erfassender Längenänderungssensor - zur schwingungslängen- und spannungsabhängigen Korrektur des Meßwerts - vorgesehen ist (deutsche Patentschrift 42 24 379). Insgesamt ist es gelungen, ein nach dem Coriolis-Prinzip arbeitendes Massendurchflußmeßgerät mit einem geraden Coriolis-Meßrohr zu schaffen, das nur einen Meßfehler von etwa 0,1 % hat (vgl. den Prospekt "Zulassung des Corimass G-Gerätes zum eichpflichtigen Verkehr" der Firma KROHNE Meßtechnik GmbH & Co. KG).

Massendurchflußmeßgeräte, die nach dem Coriolis-Prinzip arbeiten und ein gerades Coriolis-Meßrohr haben, haben jedoch auch einen physikalisch vorgegebenen Nachteil (vgl. die europäische Offenlegungsschrift 0 521 439):

Nach dem Coriolis-Prinzip arbeitende Massendurchflußmeßgeräte erfordern, daß das Coriolis-Meßrohr bzw. die Coriolis-Meßrohre - mit Hilfe von mindestens einem Schwingungserzeuger - in Schwingungen versetzt werden; aus der Tatsache, daß das Coriolis-Meßrohr bzw. die Coriolis-Meßrohre schwingen, und aus dem Durchströmen von Masse durch das Coriolis-Meßrohr bzw. durch die Coriolis-Meßrohre resultieren ja die Coriolis-Kräfte bzw. die Coriolis-Schwingungen.

Bei Massendurchflußmeßgeräten mit zwei geraden Coriolis-Meßrohren bzw. mit einem schleifenförmigen Coriolis-Meßrohr oder mit zwei schleifenförmigen Coriolis-Meßrohren sind die Coriolis-Meßrohre bzw. die schwingungswirksamen Teile der schleifenförmigen Coriolis-Meßrohre identisch ausgeführt und so angeordnet und schwingungsmäßig erregt, daß sie gegeneinander schwingen. Das hat die positive Konsequenz, daß das schwingende System insgesamt nach außen nicht als solches wirksam wird. Die Lage des Massenmittelpunktes bleibt ortsfest und auftretende Kräfte werden kompensiert. Folglich werden in das Rohrleitungssystem, in das ein solches Massendurchflußmeßgerät eingebaut ist, keine Schwingungen eingeleitet und beeinflussen Schwingungen des Rohrleitungssystems das Meßergebnis nicht.

Bei nach dem Coriolis-Prinzip arbeitenden Massendurchflußmeßgeräten, die nur ein gerades Coriolis-Meßrohr aufweisen, ist die zuvor erläuterte positive Konsequenz von gegeneinander schwingenden Coriolis-Meßrohren natürlich nicht gegeben. Der Massenmittelpunkt bleibt nicht ortsfest, und auftretende Kräfte werden nicht kompensiert. Die Folge davon ist, daß einerseits Schwingungen in das Rohrleitungssystem, in das ein solches Massendurchflußmeßgerät eingebaut ist, übertragen werden, daß andererseits Schwingungen des Rohrleitungssystems das Meßergebnis beeinflussen können. Mit der Minimierung der Einkopplung äußerer Störungen, d. h. von Schwingungen im umgebenden Rohrleitungssystem, hat sich die Fachwelt bereits befaßt (vgl. die deutschen Offenlegungsschriften 44 23 168 und 196 32 500).

Um die zuvor erläuterte Problematik, die nach dem Coriolis-Prinzip arbeitenden Massendurchflußmeßgeräten mit nur einem geraden Coriolis-Meßrohr eigen ist, zu beherrschen, wird häufig das Rohrleitungssystem, in das ein solches Massendurchflußmeßgerät eingebaut ist, zusätzlich eingespannt. In der Regel wird dabei das das strömende Medium zum Massendurchflußmeßgerät führende Rohr und das das strömende Medium vom Massendurchflußmeßgerät wegführende Rohr in einem Abstand, der dem zehn- bis fünfzehnfachen Rohrdurchmesser entspricht, eingespannt.

In Verbindung mit der zuvor erläuterten Problematik, die nach dem Coriolis-Prinzip arbeitenden Massendurchflußmeßgeräten mit nur einem geraden Coriolis-Meßrohr eigen ist, ist auch bereits vorgeschlagen worden, dort, wo das Coriolis-Meßrohr eingespannt ist, sogenannte Antiresonatoren vorzusehen, die ein auf wenigstens eine Eigenschwingung des Coriolis-Meßrohres abgestimmtes Resonanzspektrum vorgegebener Bandbreite haben sollen (vgl. die europäische Offenlegungsschrift 0 521 439). Es hat sich jedoch gezeigt, daß eine solche Maßnahme bei ohnehin schon sehr genau arbeitenden Massendurchflußmeßgeräten nicht mehr zu einer Verbesserung der Meßgenauigkeit bzw. zu einer Reduzierung des Meßfehlers führt.

Weiterhin ist insbesondere für ein Massendurchflußmeßgerät mit nur einem geraden Coriolis-Meßrohr vorgeschlagen worden, ein zum Mittelpunkt des Coriolis-Meßrohres symmetrisch angeordnetes und symmetrisch ausgeführtes Ausgleichssystem auf dem Kompensationszylinder anzuordnen (deutsche Offenlegungsschrift 197 10 806). Dieses Ausgleichssystem ist dabei so auszulegen, daß die Schwingungsamplitude des Kompensationszylinders sehr klein ist, vorzugsweise gegen null geht.

Der Erfindung liegt nun die Aufgabe zugrunde, das bekannte, nach dem Coriolis-Prinzip arbeitende Massendurchflußmeßgerät, von dem die Erfindung ausgeht, bezüglich der im einzelnen erläuterten Problematik, die daraus resultiert, daß das Massendurchflußmeßgerät nur ein gerades Coriolis-Meßrohr aufweist, noch weiter zu verbessern.

Das erfindungsgemäße Massendurchflußmeßgerät, bei dem diese Aufgabe gelöst ist, ist nun zunächst und im wesentlichen dadurch gekennzeichnet, daß sowohl die Anregungs-Schwingung als auch die Coriolis-Schwingung des Coriolis-Meßrohres innerhalb des Kompensationszylinders ausgeglichen sind. Mit "ausgeglichen" ist dabei gemeint, daß weder die Anregungs-Schwingung noch die Coriolis-Schwingung den Kompensationszylinder beeinflußt. Der Kompensationszylinder wird also weder durch die Anregungs-Schwingung noch durch die Coriolis-Schwingung zu einer "Kompensationszylinder-Schwingung" angeregt; der Kompensationszylinder bleibt unbeeinflußt, also "ruhig". Erfindungsgemäß ist also erkannt worden, daß eine weitere Verbesserung eines nach dem Coriolis-Prinzip arbeitenden Massendurchflußmeßgerätes mit nur einem im wesentlichen geraden Coriolis-Meßrohr dadurch erreichbar ist, daß der Massenmittelpunkt der Gesamtheit aller innerhalb des Kompensationszylinders vorgesehenen Bauteile ortsfest bleibt, also der Massenmittelpunkt der aus dem Coriolis-Meßrohr, dem Schwingungserzeuger oder den Schwingungserzeugern und dem Meßwertaufnehmer oder den Meßwertaufnehmern bestehenden Gesamtheit ortsfest bleibt. Befinden sich innerhalb des Kompensationszylinders weitere Bauteile, so müssen diese Bauteile natürlich in die Konzeption "Ortsfester Massenmittelpunkt" einbezogen werden.

Im einzelnen gibt es verschiedene Möglichkeiten, die zuvor erläuterte Konzeption "Ortsfester Massenmittelpunkt" zu realisieren.

Da sowohl die Anregungs-Schwingung als auch die Coriolis-Schwingung des Coriolis-Meßrohres zunächst dazu führt, daß der Massenmittelpunkt der Gesamtheit aus dem Coriolis-Meßrohr, dem Schwingungserzeuger oder den Schwingungserzeugern und dem Meßwertaufnehmer oder den Meßwertaufnehmern nicht ortsfest bleibt, müssen den zuvor aufgezählten Bauteilen innerhalb des Kompensationszylinders Bauteile hinzugefügt werden, nämlich Ausgleichsmassen, die so zu realisieren, zu dimensionieren und vorzusehen sind, daß der Massenmittelpunkt der Gesamtheit aus dem Coriolis-Meßrohr, dem Schwingungserzeuger oder den Schwingungserzeugern, dem Meßwertaufnehmer oder den Meßwertaufnehmern und den Ausgleichsmassen ortsfest bleibt.

Bei einer bevorzugten Ausführungsform des erfindungsgemäßen Massendurchflußmeßgerätes sind Ausgleichsmassen - vorzugsweise symmetrisch zur Mittelachse des Coriolis-Meßrohres - mit dem Coriolis-Meßrohr verbunden. Dazu sind an dem Coriolis-Meßrohr symmetrisch zu seiner Mittelachse Befestigungselemente vorgesehen, an denen die Ausgleichsmassen angebracht sind. Dabei müssen die Befestigungselemente so realisiert sein und die Ausgleichsmassen an den Befestigungselementen so angebracht sein, daß sowohl die Anregungs-Schwingung als auch die Coriolis-Schwingung des Coriolis-Meßrohres zu Ausgleichs-Schwingungen der Ausgleichsmassen führen.

Anstelle von symmetrisch zur Mittelachse des Coriolis-Meßrohres vorgesehenen Befestigungselementen mit identischen Ausgleichsmassen können auch asymmetrisch zur Mittelachse des Coriolis-Meßrohres Befestigungselemente vorgesehen sein, wobei dann durch eine entsprechende Dimensionierung der Ausgleichsmassen dafür gesorgt werden muß, daß der Massenmittelpunkt der Gesamtheit aus dem Coriolis-Meßrohr, dem Schwingungserzeuger oder den Schwingungserzeugern, dem Meßwertaufnehmer oder den Meßwertaufnehmern, den Befestigungselementen und den Ausgleichsmassen ortsfest bleibt.

Bei dem erfindungsgemäßen Massendurchflußmeßgerät kann im übrigen, wie das für sich im Stand der Technik bekannt ist, das Coriolis-Meßrohr mit einem mittig angeordneten Ausgleichspendel versehen sein. Mit diesem Ausgleichspendel können die Frequenz und die Amplitude der Anregungs-Schwingung des Coriolis-Meßrohres beeinflußt werden.

Eine bevorzugte Ausführungsform des erfindungsgemäßen Massendurchflußmeßgeräts ist dadurch gekennzeichnet, daß der Kompensationszylinder mit einem zur Mittelachse des Coriolis-Meßrohres im wesentlichen symmetrisch angeordneten und symmetrisch ausgeführten Ausgleichssystem versehen ist. Dieses Ausgleichssystem kann selbst wieder als schwingungsfähiges System ausgeführt sein, bestehend aus einer Ausgleichsmasse und einer Ausgleichsfeder. In bezug auf die spezielle Ausgestaltung eines solchen Ausgleichssystems wird auf die deutsche Offenlegungsschrift 197 10 806 verwiesen, deren Offenbarungsgehalt ausdrücklich auch hier zum Offenbarungsgehalt gemacht wird.

Durch das zuvor angesprochene Ausgleichssystem kann eine noch verbleibende "Kompensationszylinder-Schwingung" eliminiert, jedenfalls aber reduziert werden. Eine solche verbleibende "Kompensationszylinder-Schwingung" kann daraus resultieren, daß durch das Coriolis-Meßrohr ein Medium strömt, dessen Dichte von der Dichte von normalerweise durch das Coriolis-Meßrohr strömenden Medien abweicht. In der Regel werden nämlich Massendurchflußmeßgeräte, folglich auch das erfindungsgemäße Massendurchflußmeßgerät, für ein Medium mit einer bestimmten Dichte ausgelegt. Für das erfindungsgemäße Massendurchflußmeßgerät bedeutet das, daß in die Konzeption "Ortsfester Massenmittelpunkt" auch das sich in dem Coriolis-Meßrohr jeweils befindende Medium mit einer bestimmten Dichte berücksichtigt wird und einer durch eine andere Dichte des Mediums hervorgerufenen Beeinträchtigung der Konzeption "Ortsfester Massenmittelpunkt" durch das zuvor beschriebene Ausgleichssystem entgegengewirkt wird.

Im einzelnen gibt es nun eine Vielzahl von Möglichkeiten, das erfindungsgemäße Massendurchflußmeßgerät auszugestalten und weiterzubilden. Dazu wird verwiesen einerseits auf die dem Patentanspruch 1 nachgeordneten Patentansprüche, andererseits auf die Beschreibung eines bevorzugten Ausführungsbeispiels in Verbindung mit der Zeichnung. In der Zeichnung zeigen
- Fig. 1: einen Längsschnitt durch ein Ausführungsbeispiel eines erfindungsgemäßen Massendurchflußmeßgerätes,
- Fig. 2: eine schematische Darstellung des in Fig. 1 dargestellten Massendurchflußmeßgerätes mit - quantitativ extrem übertrieben dargestellter - AnregungsSchwingung und
- Fig. 3: eine schematische Darstellung des in Fig. 1 dargestellten Massendurchflußmeßgerätes mit - quantitativ extrem übertrieben dargestellter - Coriolis-Schwingung.

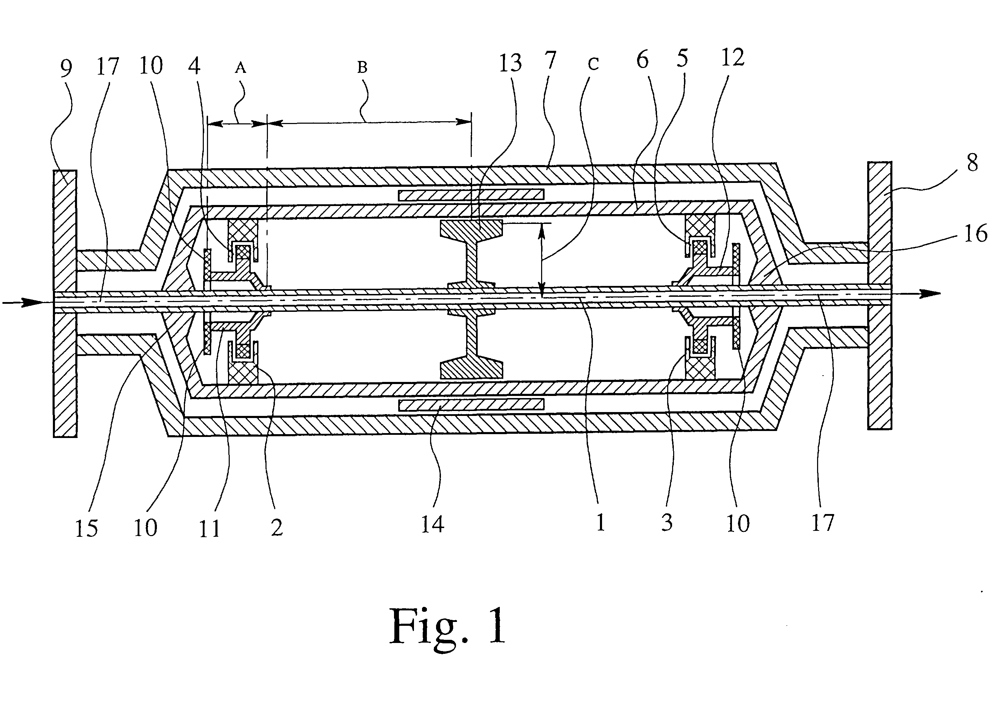

Die Fig. 1 zeigt ein Massendurchflußmeßgerät für strömende Medien, das nach dem Coriolis-Prinzip arbeitet, mit einem das strömende Medium führenden geraden Coriolis-Meßrohr 1, mit zwei auf das Coriolis-Meßrohr 1 einwirkenden Schwingungserzeugern 2, 3, mit zwei Coriolis-Kräfte und/oder auf Coriolis-Kräften beruhende Coriolis-Schwingungen erfassenden Meßwertaufnehmern 4, 5 und mit einem nicht von dem Medium durchströmten Kompensationszylinder 6. Das Coriolis-Meßrohr 1 ist innerhalb des Kompensationszylinders 6 angeordnet und mit diesem mechanisch verbunden. Weiter ist in der Fig. 1 ein äußeres Gehäuse 7 dargestellt, welches als mechanischer Schutz dient, möglichst steif ausgeführt sein sollte und seitlich zwei Befestigungsflansche 8, 9 aufweist. Anstelle von zwei Schwingungserzeugern 2, 3 und zwei Meßwertaufnehmern 4, 5, wie dies in Fig. 1 dargestellt ist, kann auch lediglich ein Schwingungserzeuger, der dann vorzugsweise mittig an dem Coriolis-Meßrohr 1 angreift, oder ein Meßwertaufnehmer vorgesehen sein.

Erfindungsgemäß sind nun sowohl die Anregungs-Schwingung als auch die Coriolis-Schwingung des Coriolis-Meßrohres 1 innerhalb des Kompensationszylinders 6 ausgeglichen. Damit ist gemeint, daß weder die Anregungs-Schwingung noch die Coriolis-Schwingung den Kompensationszylinder 6 beeinflußt. Der Kompensationszylinder 6 wird also weder durch die Anregungs-Schwingung noch durch die Coriolis-Schwingung zu einer "Kompensationszylinder-Schwingung" angeregt; der Kompensationszylinder 6 bleibt unbewegt, also "ruhig". Erfindungsgemäß ist erkannt worden, daß eine weitere Verbesserung eines nach dem Coriolis-Prinzip arbeitenden Massendurchflußmeßgerätes mit nur einem geraden Coriolis-Meßrohr 1 dadurch erreichbar ist, daß der Massenmittelpunkt der Gesamtheit aller innerhalb des Kompensationszylinders 6 vorgesehenen Bauteile ortsfest bleibt, also der Massenmittelpunkt der Gesamtheit aus dem Coriolis-Meßrohr 1, den Schwingungserzeugern 2, 3, den Meßwertaufnehmern 4, 5 und weiteren Bauteilen, auf die weiter unten noch eingegangen wird, ortsfest bleibt.

Im dargestellten Ausführungsbeispiel ist die zuvor erläuterte Konzeption "Ortsfester Massenmittelpunkt" wie folgt realisiert:

Da sowohl die Anregungs-Schwingung als auch die Coriolis-Schwingung des Coriolis-Meßrohres 1 zunächst dazu führt, daß der Massenmittelpunkt der Gesamtheit aus dem Coriolis-Meßrohr 1, den Schwingungserzeugern 2, 3 und den Meßwertaufnehmern 4, 5 nicht ortsfest bleibt, müssen den zuvor aufgezählten Bauteilen innerhalb des Kompensationszylinders 6 Bauteile hinzugefügt werden, nämlich Ausgleichsmassen 10, die so zu realisieren, zu dimensionieren und vorzusehen sind, daß der Massenmittelpunkt der Gesamtheit aus dem Coriolis-Meßrohr 1, den Schwingungserzeugern 2, 3, den Meßwertaufnehmern 4, 5 und den Ausgleichsmassen 10 trotz der Anregungs-Schwingung und trotz der Coriolis-Schwingung ortsfest bleibt.

In dem in Fig. 1 dargestellten Ausführungsbeispiel sind die Ausgleichsmassen 10 symmetrisch zur Mittelachse M des Coriolis-Meßrohres 1 angeordnet. Im einzelnen sind dazu an dem Coriolis-Meßrohr 1 - symmetrisch zur Mittelachse M des Coriolis-Meßrohres 1 - Befestigungselemente 11, 12 vorgesehen, an denen die Ausgleichsmassen 10 angebracht sind. Im Ausführungsbeispiel sind die Befestigungselemente 11, 12, die aus einem relativ steifen Material bestehen, hülsenförmig ausgeführt; an jedem Befestigungselement 11, 12 sind jeweils zwei Ausgleichsmassen 10 angebracht.

Wie die Fig. 1 zeigt, sind im Ausführungsbeispiel Teile der Schwingungserzeuger 2, 3 und Teile der Meßwertaufnehmer 4, 5 an den Befestigungselementen 11, 12 angebracht; die jeweils anderen Teile der Schwingungserzeuger 2, 3 und der Meßwertaufnehmer 4, 5 sind am Kompensationszylinder 6 befestigt.

Im übrigen gilt für das dargestellte Ausführungsbeispiel, wie die Fig. 1 bis 3 zeigen, daß das Coriolis-Meßrohr 1 mit einem mittig angeordneten Ausgleichspendel 13 versehen ist. Mit diesem Ausgleichspendel 13 können die Frequenz und die Amplitude der Anregungs-Schwingung des Coriolis-Meßrohres 1 beeinflußt werden.

Für das in Fig. 1 im einzelnen dargestellte Ausführungsbeispiel eines erfindungsgemäßen Massendurchflußmeßgerätes gilt weiter, daß der Kompensationszylinder 6 mit einem im wesentlichen symmetrisch zur Mittelachse M des Coriolis-Meßrohres 1 angeordneten und symmetrisch ausgeführten Ausgleichsystem 14 versehen ist. Dieses Ausgleichsystem 14 kann, was nicht dargestellt ist, selbst als schwingungsfähiges System ausgeführt sein, bestehend aus einer Ausgleichsmasse und einer Ausgleichsfeder. In bezug auf die spezielle Ausgestaltung des Ausgleichsystems 14 wird auf die deutsche Offenlegungsschrift 197 10 806 verwiesen, deren Offenbarungsgehalt ausdrücklich auch hier zum Offenbarungsgehalt gemacht wird.

Durch das Ausgleichsystem 14, mit dem der Kompensationszylinder 6 versehen ist, kann eine noch verbleibende "Kompensationszylinder-Schwingung" eliminiert, jedenfalls aber reduziert werden. Eine solche verbleibende "Kompensationszylinder-Schwingung" kann daraus resultieren, daß, wie weiter oben bereits ausgeführt worden ist, durch das Coriolis-Meßrohr 1 ein Medium strömt, dessen Dichte von der Dichte von normalerweise durch das Coriolis-Meßrohr 1 strömenden Medien abweicht.

Dem Problem "Kompensationszylinder-Schwingung", resultierend daraus, daß durch das Coriolis-Meßrohr 1 ein Medium strömt, dessen Dichte von der Dichte von normalerweise durch das Coriolis-Meßrohr 1 strömenden Medien abweicht, kann auch dadurch begegnet werden, daß die Steifigkeit der mit den Ausgleichsmassen 10 versehenen Befestigungselemente 11, 12 so gewählt ist, daß sich die Amplitude der Ausgleichs-Schwingung einer Änderung der Dichte des das Coriolis-Meßrohr 1 durchströmenden Mediums anpaßt. Dazu empfiehlt es sich, die Resonanzfrequenz des Systems aus den Ausgleichsmassen 10 und den Befestigungselementen 11, 12 als die Frequenz der Anregungs-Schwingung zu wählen. Dem liegt folgendes zugrunde:

Bei dem erfindungsgemäßen Massendurchflußmeßgerät kann, wie für sich im Stand der Technik bekannt, die Frequenz der Anregungs-Schwingung so gewählt bzw. gesteuert werden, daß das Coriolis-Meßrohr 1 in der Resonanzfrequenz schwingt. Ändert sich die Resonanzfrequenz, z. B. dadurch, daß sich die Dichte des strömenden Mediums ändert, so wird die Frequenz der Anregungs-Schwingung entsprechend geändert. Wird nun die Resonanzfrequenz des Systems aus den Ausgleichsmassen 10 und den Befestigungselementen 11, 12 gezielt anders als die Frequenz der Anregungs-Schwingung gewählt, so führt eine dichteabhängige Änderung der Frequenz der Anregungs-Schwingung zu der gewollten Änderung der Amplitude der Ausgleichs-Schwingung.

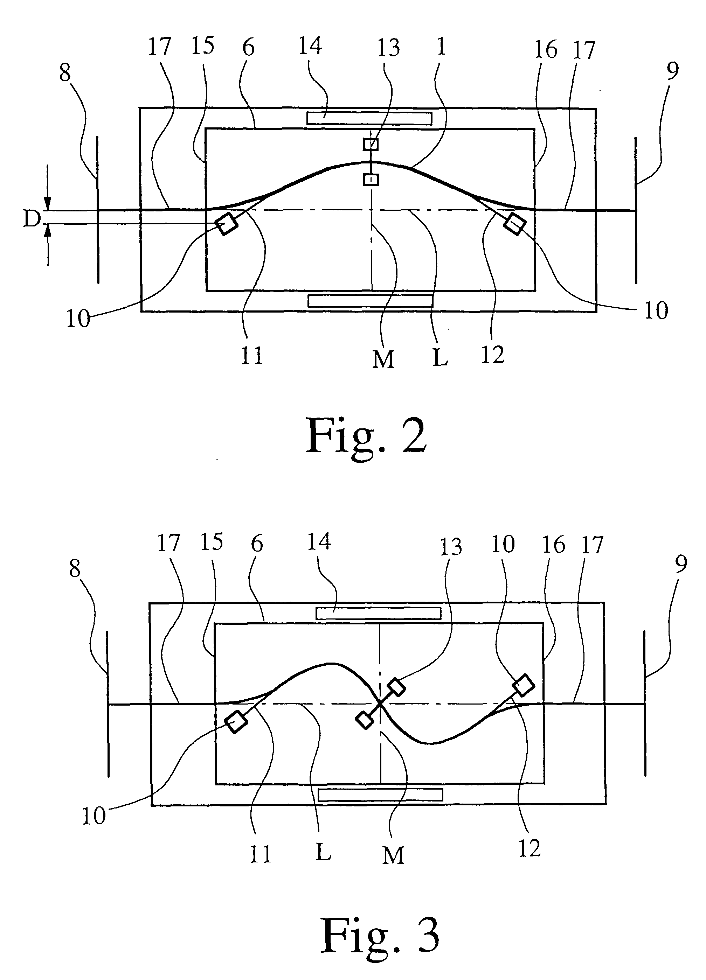

Die Fig. 2 zeigt, daß im dargestellten Ausführungsbeispiel das Coriolis-Meßrohr 1 innerhalb des Kompensationszylinders 6 mit der Grundschwingung schwingt, und zwar mit der vollen Wellenlänge, und eine Zusammenschau der Fig. 2 und 1 zeigt, daß die Meßwertaufnehmer 4, 5 an einem Ort geringer Amplitude der Anregungsschwingung angeordnet sind.

In den Fig. 2 und 3 sind schematisch die Seitenwände 15, 16 des Kompensationszylinders 6 gezeigt. Sind diese Seitenwände 15, 16 entsprechend steif und ist das Coriolis-Meßrohr 1 entsprechend fest innerhalb des Kompensationszylinders 6 bzw. innerhalb der Seitenwände 15, 16 eingespannt, so führt das dazu, daß die beiderseitige Anschlußrohrleitung 17 zwischen dem Coriolis-Meßrohr 1 und den Befestigungsflanschen 8, 9 nicht schwingt. Dies ermöglicht eine Verringerung der Baulänge des erfindungsgemäßen Massendurchflußmeßgerätes, da eine "weiche" Ankopplung des Coriolis-Meßrohres 1 an die Befestigungsflansche 8, 9 nicht erforderlich ist.

Wie bereits ausgeführt, liegt dem erfindungsgemäßen Massendurchflußmeßgerät die Konzeption zugrunde, daß der Massenmittelpunkt der Gesamtheit aller innerhalb des Kompensationszylinders 6 vorgesehenen Bauteile stets ortsfest bleibt; es bleibt also der Massenmittelpunkt der Gesamtheit aus dem Coriolis-Meßrohr 1, den Schwingungserzeugern 2, 3, den Meßwertaufnehmern 4, 5, den Ausgleichsmassen 10, den Befestigungselementen 11, 12 und dem Ausgleichspendel 13 stets ortsfest, und zwar sowohl bei der Anregungs-Schwingung als auch bei der Coriolis-Schwingung. Durch eine geeignete Wahl der Ausgleichsmassen 10, der Länge A der Befestigungselemente 11, 12, des Abstandes B der Befestigungselemente 11, 12 von der Mittelachse M des Coriolis-Meßrohres 1 und der Länge C des Ausgleichspendels 13 erreicht man, daß der Massenmittelpunkt der Gesamtheit aller innerhalb des Kompensationszylinders 6 vorgesehenen Bauteile ortsfest bleibt, und zwar sowohl bei der Anregungs-Schwingung als auch bei der Coriolis-Schwingung.

Die Fig. 2 und 3 zeigen eine schematische Darstellung in bezug auf das in Fig. 1 im einzelnen dargestellte erfindungsgemäße Massendurchflußmeßgerät, einerseits in der Anregungs-Schwingung des Coriolis-Meßrohres (Fig. 2), andererseits in der Coriolis-Schwingung des Coriolis-Meßrohres 1 (Fig. 3), - wobei das, worauf die Erfindung beruht, jeweils quantitativ extrem übertrieben dargestellt ist. Wesentlich ist, daß sowohl bei der Anregungs-Schwingung des Coriolis-Meßrohres 1 als auch bei der Coriolis-Schwingung des Coriolis-Meßrohres 1 die Ausgleichsmassen 10 Ausgleichs-Schwingungen ausführen, die der Anregungs-Schwingung bzw. der Coriolis-Schwingung entgegengerichtet sind. Das ist in den Fig. 2 und 3 dadurch - quantitativ extrem übertrieben - dargestellt, daß Ausgleichsmassen 10 auf der dem Coriolis-Meßrohr 1 abgewandten Seite der Längsachse L dargestellt sind. Tatsächlich können sich bei dem in Fig. 1 dargestellten Ausführungsbeispiel eines erfindungsgemäßen Massendurchflußmeßgerätes natürlich nicht die Ausgleichsmassen 10 auf nur einer Seite des Coriolis-Meßrohres 1 befinden. Vielmehr ist es so, daß sich der Abstand D des Massenmittelpunktes der Ausgleichsmassen 10 von der Längsachse L des Coriolis-Meßrohres 1 verändert. Dieser Abstand D ist null, wenn weder eine Anregungs-Schwingung noch eine Coriolis-Schwingung wirksam sind. Wie die Fig. 2 zeigt, befindet sich der Massenmittelpunkt der Ausgleichsmassen 10 im Abstand D unterhalb der Längsachse L des Coriolis-Meßrohres 1, wenn sich das Coriolis-Meßrohr 1 infolge der Anregungs-Schwingung, wie in Fig. 2 gezeigt, oberhalb der Längsachse L befindet.

Schließlich ist noch darauf hinzuweisen, daß mit der Mittelachse M des Coriolis-Meßrohres 1 und der Längsachse L des Coriolis-Meßrohres 1 jeweils die Mittelachse bzw. die Längsachse im "ruhenden Zustand" des Coriolis-Meßrohres 1 gemeint ist.

## Patentansprüche

1. Massendurchflußmeßgerät, das nach dem Coriolis-Prinzip arbeitet, mit einem ein strömendes Medium führenden, im wesentlichen geraden Coriolis-Meßrohr (1), mit mindestens einem dem Coriolis-Meßrohr (1) zugeordneten, das Coriolis-Meßrohr (1) anregenden Schwingungserzeuger (2, 3), mit mindestens einem dem Coriolis-Meßrohr (1) zugeordneten, Coriolis-Kräfte und/oder auf Coriolis-Kräften beruhende Coriolis-Schwingungen erfassenden Meßwertaufnehmer (4, 5) und mit einem Kompensationszylinder (6), wobei das Coriolis-Meßrohr (1) innerhalb des Kompensationszylinders (6) angeordnet und mit dem Kompensationszylinder (6) mechanisch verbunden ist, **dadurch gekennzeichnet**, daß sowohl die Anregungs-Schwingung als auch die Coriolis-Schwingung des Coriolis-Meßrohres (1) innerhalb des Kompensationszylinders (6) ausgeglichen sind.

2. Massendurchflußmeßgerät nach Anspruch 1, dadurch gekennzeichnet, daß Ausgleichsmassen (10) - vorzugsweise symmetrisch zur Mittelachse (M) des Coriolis-Meßrohres (1) - mit dem Coriolis-Meßrohr (1) verbunden sind.

3. Massendurchflußmeßgerät nach Anspruch 2, dadurch gekennzeichnet, daß an dem Coriolis-Meßrohr (1) symmetrisch zur Mittelachse (M) des Coriolis-Meßrohres (1) Befestigungselemente (11, 12) vorgesehen sind und die Ausgleichsmassen (10) jeweils an den Befestigungselementen (11, 12) angebracht sind.

4. Massendurchflußmeßgerät nach Anspruch 3, dadurch gekennzeichnet, daß die Befestigungselemente (11, 12) hülsenförmig ausgeführt sind.

5. Massendurchflußmeßgerät nach Anspruch 3 oder 4, dadurch gekennzeichnet, daß an jedem Befestigungselement (11, 12) jeweils zwei Ausgleichsmassen (10) angebracht sind.

6. Massendurchflußmeßgerät nach einem der Ansprüche 3 bis 5, dadurch gekennzeichnet, daß die Schwingungserzeuger oder Teile der Schwingungserzeuger (2, 3) und/oder die Meßwertaufnehmer oder Teile der Meßwertaufnehmer (4, 5) an den Befestigungselementen (11, 12) angebracht sind.

7. Massendurchflußmeßgerät nach einem der Ansprüche 1 bis 6, dadurch gekennzeichnet, daß das Coriolis-Meßrohr (1) mit einem mittig angeordneten Ausgleichspendel (13) versehen ist.

8. Massendurchflußmeßgerät nach einem der Ansprüche 1 bis 7, dadurch gekennzeichnet, daß der Kompensationszylinder (6) mit einem im wesentlichen symmetrisch zur Mittelachse (M) des Coriolis-Meßrohres (1) angeordneten und symmetrisch ausgeführten Ausgleichssystem (14) versehen ist.

9. Massendurchflußmeßgerät nach einem der Ansprüche 3 bis 8, dadurch gekennzeichnet, daß die Steifigkeit der Befestigungselemente (11, 12) so gewählt ist, daß die Amplitude der Ausgleichs-Schwingung - der Ausgleichsmassen (10) und der Befestigungselemente (11, 12) - sich einer Änderung der Dichte des das Coriolis-Meßrohr (1) durchströmenden Mediums anpaßt.

10. Massendurchflußmeßgerät nach Anspruch 9, dadurch gekennzeichnet, daß die Resonanzfrequenz des Schwingungssystems aus den Ausgleichsmassen (10) und den Befestigungselementen (11, 12) gezielt anders gewählt ist als die Frequenz der Anregungs-Schwingung.

11. Massendurchflußmeßgerät nach einem der Ansprüche 1 bis 10, dadurch gekennzeichnet, daß das Coriolis-Meßrohr (1) innerhalb des Kompensationszylinders (6) mit der Grundschwingung und voller Wellenlänge schwingt.

12. Massendurchflußmeßgerät nach einem der Ansprüche 1 bis 11, dadurch gekennzeichnet, daß die Meßwertaufnehmer (4, 5) an einem Ort geringer Amplitude der Anregungs-Schwingung angeordnet sind.
